# EUROPEAN PATENT SPECIFICATION

(11) **EP 4 585 574 B1**
(45) Date of publication and mention of the grant of the patent: **11.02.2026**
(21) Application number: 25150673.9
(22) Date of filing: 08.01.2025
(51) Int. Cl.: C03B 23/043, F23D 14/28, F23D 14/02

(54) **METHOD AND PLANT FOR FORMING GLASS ITEMS BY FLAME AND ASSOCIATED FLAME SUPPLY SYSTEM**
VERFAHREN UND ANLAGE ZUR HERSTELLUNG VON GLASARTIKELN DURCH FLAMME UND ZUGEHÖRIGES FLAMMENZUFÜHRSYSTEM
PROCÉDÉ ET INSTALLATION DE FORMATION D'ARTICLES EN VERRE PAR FLAMME ET SYSTÈME D'ALIMENTATION EN FLAMME ASSOCIÉ

(30) Priority: 09.01.2024 IT 202400000273
(43) Date of publication of application: 16.07.2025
(73) Proprietor: Soffieria Bertolini S.p.A., 10128 Torino (IT)
(72) Inventor: SURRA, Renato, 10128 TORINO (IT)
(74) Representative: Studio Torta S.p.A.

(56) References cited:
- WO-A1-2022/200127
- CN-A- 102 618 341

## Description

### Cross-reference to related patent applications

This patent application claims priority from Italian patent application no. 102024000000273 filed on January 9, 2024.

### Technical field of the invention

This invention relates to a method and plant for forming glass items by flame, in particular for producing glass bottles, vials, cartridges, or syringes or, in any case, any glass container for pharmaceutical or laboratory use.

This invention also extends to an associated flame supplying system from effective and safe renewable sources.

### Prior Art

It is known that glass bottles and/or vials for pharmaceutical use (or other similar glass containers for pharmaceutical or laboratory use) are produced mainly using glass tubes, which are cut and modelled into the desired shape by flame in special forming stations of a plant for producing glass containers such as, for example, bottles/vials, also comprising, usually, at least one furnace for subsequent stress-relieving heat treatment
In this kind of plant, therefore, large quantities of a gaseous fuel must be used that has sufficient calorific value to generate a flame that can make the glass tube, or more generally glass, being processed reaching the melting temperature of glass, so that the glass tube or item being processed becomes plastic and can be processed to model it into the desired shape, generally by means of mechanical tools (scissors, pliers, etc.) and/or flows of pressurised air.

Industrial methane, for example mains methane, is usually used as the gaseous fuel.

CN102618341 A teaches the use of biogas for re-forming glass preforms into lamps using a burner fed by biogas containing 50-70 wt% methane and 35-45 wt% carbon dioxide.

However, both the high cost of mains methane and the need to increasingly make use of renewable sources created the need to find alternative fuels.

It is known that it is possible to obtain, for example by means of controlled fermentation processes, combustible biogas, which contains approximately 50% methane by volume, together with a much smaller quantity of other combustible gases, like ethane or butane, and inert ones like carbon dioxide (that makes up almost 47%vol) and nitrogen, from organic waste, whether industrial or civil.

These inert gases, as well as not contributing to the generation of heat, subtract a significant part of the heat generated by the combustion of methane or other combustible gases. Experimental tests have proven that biogas containing approximately 50% methane does not have enough calorific power to supply a flame that is able to heat the glass to its melting temperature.

To increase the calorific power of a biogas, it is, therefore, necessary to increase the concentration of methane in it, for example by means of a carbon dioxide sequestration plant. However, these plants are costly and complex to operate.

Another approach could be that of replacing the methane with another gaseous fuel, that can, at least in part, be obtained from renewable sources or, in any case, sustainably, like hydrogen.

Hydrogen can actually be obtained from water via electrolysis or thermal splitting, using solar power for both processes.

However, hydrogen is a potentially dangerous fuel. It actually generates an invisible flame, is odourless, and is highly flammable, which constitutes a strong hazard in terms of self-combustion.

### Summary of the invention

The purpose of this invention is to provide a method and a plant for carrying out the forming of glass items by flame, in particular for producing glass bottles, vials, or other containers for pharmaceutical or laboratory use, without the drawbacks of the prior art, in particular capable of generating a flame that has a temperature such as to make a raw material, such as a glass tube, reach the melting temperature of glass, so that the glass tube can be processed, using a fuel with a lower cost than the current cost of methane, which can be obtained, at least in part, from renewable sources and which is safe to use.

Another purpose of the invention is to provide an effective and safe associated flame supplyng system from renewable sources, able to generate a flame that is suitable for enabling the processing of glass bottles, vials, or other containers for pharmaceutical or laboratory use.

According to the invention, therefore, a method and a plant for carrying out the forming of glass items by flame are provided, in particular for producing glass bottles, vials, syringes, or any other container or item for pharmaceutical or laboratory use, in particular from a glass tube, as well as an associated flame supplying system, having the features recited in the attached claims.

### Brief Description of the Drawings

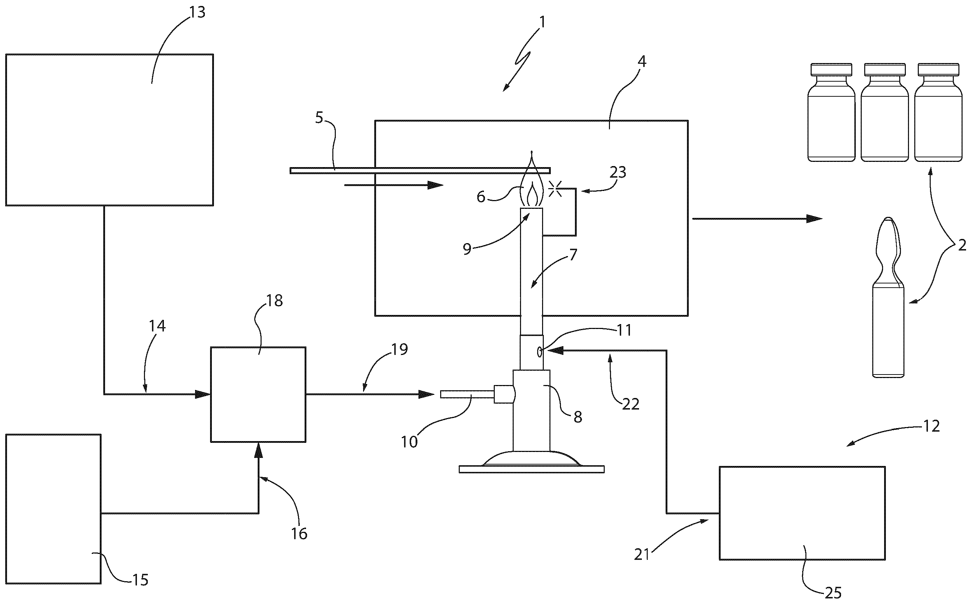

Additional features and advantages of this invention will be clearer from the description that follows of one of its non-limiting embodiments, made with reference to the figure in the attached drawing (single figure) that schematically illustrates, using a block diagram, a method and a plant for producing glass bottles for pharmaceutical use according to the invention.

### Detailed description

With reference to the single figure attached, reference number 1 indicates, as a whole, a plant for producing glass bottles 2 for pharmaceutical use, bottles 2 that may have various shapes and that are of a generally known kind.

More generally, the plant 1 according to the invention may be configured to produce any glass item by flame, in particular for producing not only bottles, but also vials, syringes, or any other glass container or item for pharmaceutical or laboratory use.

The plant 1, which is only illustrated schematically in the attached figures and does not only refer to the production of glass bottles for pharmaceutical use, comprises at least one forming station 4 by flame for glass items 2, namely glass bottles 2, in the preferred embodiment starting with a glass tube 5, which is moved forward through the station 4.

It is obvious for the person skilled in the art that what will be said can also apply to any other starting product other than a glass tube 5 and, in any case, suitable for obtaining glass items by flame forming.

The station 4 is generally of a known type and, therefore, is not illustrated in detail for simplicity's sake, but is represented by a simple block.

The plant 1 may also comprise a stress-relieving station, which is known and not illustrated for simplicity, for example consisting of an annealing furnace, as well as a silicone-coating station and a firing station for the siliconised glass bottles 2 (or other items), also known and not illustrated for simplicity.

All these stations are characterised by the need to heat the glass to relatively high temperatures. In particular, the station 4 must be able to rapidly heat, in a targeted way, at least part of the tube (or another raw starting product) 5 being processed, to the melting temperature of glass that it is composed of, so as to make the tube 5 or its portions, of an at least pasty consistency that can, therefore, be processed in a known way at the station 4, with known tools, like pliers, scissors, or knives, for example to cut the tube 5 into segments, as well as compressed air blowers, moulds, and other known devices that are not illustrated for simplicity.

To obtain the necessary fast, targeted heating up to the melting temperature of glass, it is necessary to process the glass tube 5 (or another raw starting product) by a flame 6 that has a suitable temperature and thermal power.

The flame 6 is generated by at least one burner 7, of any known kind, suitable for the purpose. The burner 7 is only schematically represented in the figure and without any semblance of verisimilitude, merely by way of example.

The burner 7 comprises a body 8 provided with a nozzle 9 configured to generate the flame 6, a fuel inlet 10 for a gaseous fuel and a comburent inlet 11, for a flow of air, either from the environment or enriched in oxygen, or pure industrial oxygen, and is connected in a known way with the forming station 4, of which it is an integral part.

Burners with a similar, general structure supplied with a gaseous fuel are also present in other parts of the plant 1, for example in the known re-firing and/or firing stations listed earlier, which are not illustrated. Therefore, what will be described with reference to the forming station 4 and to the burner 7 also holds true for any other stations and their respective burners.

The burner 7 connected with the forming station 4 is configured to generate a flame 6 that has a calorific power such as to bring at least part of the glass tube 5 (or another raw starting product) to the melting temperature.

The burner 7 is equipped with a supplying system 12 that is schematically depicted in the figure using simple blocks.

The supplying system 12 of the burner 7 comprises, in combination, according to a first aspect of the invention, a source 13 of a biogas 14 (indicated by the arrow), a source 15 of basically pure hydrogen 16, for example consisting of a pressurized cylinder of industrial hydrogen, and a mixer 18 connected with the source 13 of biogas 14 and with the source 15 of hydrogen 16.

The mixer 18 is configured to create, in predetermined proportions, a biogas/hydrogen mixture 19 (illustrated with an arrow) and to feed this mixture 19 to the at least one burner 7.

The feeding system 12 finally also comprises a supply 21 to the at least one burner 7 of a gaseous comburent 22 (illustrated with an arrow in the attached figure) in a stoichiometry quantity such as to generate, together with the biogas/hydrogen mixture 19, subject to controlled ignition, a flame 6 that is designed to bring the glass of the tube 5 to its melting temperature.

The supplying system 12 is generally also provided with a known ignition device 23, for example a spark-ignition device, configured to ignite the flame 6, activating the combustion of the biogas/hydrogen mixture 18 sustained by the mixing in the burner 7 with the comburent 22.

According to one aspect of the invention, the source 13 of biogas 14 consists of a known, renewable production plant, for example using fermentation of agricultural waste and stable slurry, configured to provide a biogas 14 containing at least 50% methane by volume, preferably at least 52% vol. methane.

The source of hydrogen 15 preferably consists of, as already indicated, at least one pressurized cylinder 15, containing basically pure industrial hydrogen, thus made of suitably strong steel and equipped with safety valves, thus constituting a container and source of gaseous fuel that is very reliable.

The supply 21 of gaseous comburent 22 generally consists of a known generator 25 of an air or oxygen flow, in the latter case, it may consist of a pressurised container. Therefore, the gaseous comburent 22 may simply consist, according to one aspect of the invention, of air from the environment, or of a mixture of air and oxygen, or pure oxygen.

According to one, non-secondary aspect of the invention, the mixer 18 is configured to generate a biogas/hydrogen mixture 19 having a hydrogen 16 content between 20% vol. and 30% vol.

It has actually been experimentally proven that a hydrogen 16 content less than 20% vol. does not make it possible to obtain a final gaseous fuel consisting of the biogas/hydrogen mixture 19 that has enough calorific power to generate a flame 6 capable of bringing the glass to its melting temperature.

In contrast, a hydrogen content above 30% vol. is useless, on the one hand, since it does not further increase the calorific power of the mixture 19, but, in contrast, increases the costs and, on the other hand, and above all, a mixture that is too rich in hydrogen would have the same potentially hazardous features as pure hydrogen, such as the generation of invisible flames, a basically imperceptible, or not very perceptible, odour, and high flammability.

Based on what has been described, it is clear that the invention also extends to a generic flame supplying system, like the supplying system 12 just described, for any burner 7, not necessarily connected with the forming station 4, but in any case configured to supply a fuel and a gaseous comburent to a burner 7.

This generic supplying system 12 according to the invention comprises, therefore, similarly to what has already been described, a source 13 of a biogas 14, a source 15 of hydrogen 16, a mixer 18 of any known type that is suitable for the purpose, connected with the sources 13 of biogas 14 and 15 of hydrogen 16 and configured to create, in predetermined proportions, a biogas/hydrogen mixture 19 constituting the gaseous fuel to supply to the burner 7, the mixer 18 being hydraulically connected to a fuel inlet 10 of the burner 7 and a generator 25 of a flow of air or oxygen 22 hydraulically connected to a fuel inlet 11 of the burner 7.

Wherein the mixer 18 is configured to dose a biogas/hydrogen mixture 19 that has a hydrogen 16 content ranging between 20% vol. and 30% vol., so that the burner 7 is designed to generate, in use, a flame 6, subject to controlled ignition, for example by means of an ignition device 23, which has a thermal power such as to reach the melting temperature of glass and, at the same time, is visible and incapable of self-ignition.

From what has been described, finally, it is clear that the invention also extends to a method for carrying out the forming of glass items 2 by flame, particularly, but not exclusively, glass bottles 2 for pharmaceutical or laboratory use, preferably from glass tubes 5, the method comprising the steps of
i)- supply at least one raw material consisting of a glass blank, preferably a glass tube 5, to at least one forming station 4 equipped with at least one burner 7;
ii)- generate, by means of the at least one burner 7, a flame 6 of sufficient temperature to make at least part of the glass blank, namely a glass tube 5, reach the melting temperature of glass;
iii)- form a glass item 2 by means of mechanical processing and cutting said at least part of the glass blank 5, in the non-limiting example illustrated consisting of a glass tube 5, brought to the melting temperature of glass by the flame 6;
and wherein the step of generating the flame 6, comprises the following steps:
iv)- provide a supply source 13 of a biogas 14;
v)- provide a supply source 15 of hydrogen 16;
vi)- supply a controlled flow of biogas 14 and a controlled flow of hydrogen 16 to a mixer 18, to create, in the mixer, a biogas/hydrogen mixture 19 in predetermined proportions;
vii) supply to the at least one burner 7 the biogas/hydrogen mixture 19 together with a controlled flow of a comburent or oxidizer 22, so as to generate the flame 6.

The comburent 22 is preferably air or oxygen or a mixture of both.

In addition, the flame 6 is generated by means of the at least one burner 7 mixing in it the biogas/hydrogen mixture 19 and the comburent 22 in suitable stoichiometry proportions and producing the controlled ignition of the biogas/hydrogen mixture 19 mixed with the comburent 22.

The source 13 for supplying biogas 14 is chosen so that the biogas 14 contains at least 50% methane by volume, preferably approximately 52% vol. methane, while the source for supplying hydrogen 16 may consist of a simple pressurized cylinder 15, containing basically pure hydrogen 16.

According to one important aspect of the invention, the biogas/hydrogen mixture 19 is made in the mixer 18 in such a manner to have a hydrogen 16 content between 20% and 30% by volume calculated out of the total volume of the mixture 19.

In this way, a fuel mixture 19 is obtained that has a calorific power suitable for generating a flame 6 that is capable of bringing the glass to its melting temperature and, at the same time, capable of generating a visible flame 6, which is a source of safety for the operators who can see it, the biogas/hydrogen mixture 19 also being detectable by its smell, in the event of leaks, and not being subject to self-combustion thanks to the limited hydrogen content.

All the purposes of the invention are, therefore, achieved.

## Claims

1. A method for carrying out the forming of glass items by flame, particularly but not exclusively glass bottles (2) for pharmaceutical or laboratory use, from at least one raw material consisting of a glass blank, preferably a glass tube (5), the method comprising the steps of
(i)- supply at least one raw material consisting of a glass blank (5), preferably a glass tube (5), to at least one forming station (4) equipped with at least one burner (7);
(ii)- generate, by means of the at least one burner (7), a flame (6) of sufficient temperature to make at least part of said at least one raw material consisting of a glass blank (5), namely a glass tube (5), to reach the melting temperature of glass;
(iii)- forming a glass item (2) by machining and cutting said at least part of the glass blank, namely the glass tube (5), bringing it to glass melting temperature; **characterized in that** the step of generating the flame, comprises the following steps:
(iv)- provide a supply source (13) of a biogas (14);
(v)- provide a supply source (15) of hydrogen (16);
(vi)-supply a controlled flow of biogas (14) and a controlled flow of hydrogen (16) to a mixer (18), to create, in the mixer, a mixture (19) biogas/hydrogen in predetermined proportions;
(vii) supply to said at least one burner (7) said mixture (19) biogas/hydrogen together with a controlled flow of a comburent or oxidizer (22), so as to generate said flame.

2. The method according to claim 1, **characterized in that** said comburent (22) is air and/or oxygen.

3. The method according to claim 1 or 2, **characterized in that** said flame (6) is generated by means of said at least one burner (7), mixing in it said biogas/hydrogen mixture (19) and said comburent (22) in suitable proportions and producing the controlled ignition of the biogas/hydrogen mixture mixed with the comburent.

4. The method according to one of the previous claims, **characterized in that** said biogas (14) supply source (13) is chosen so that the biogas (14) contains methane in at least 50% by volume.

5. The method according to one of the previous claims, **characterized in that** said supply source (15) of hydrogen (16) consists of a pressurized cylinder containing substantially pure hydrogen.

6. The method according to any of the preceding claims, **characterized in that** said mixture (19) biogas/hydrogen is made in said mixer in such a manner to have a hydrogen content between 20% and 30% by volume calculated on the total volume of the mixture.

7. A plant (1) for the production of glass items by flame, particularly but not exclusively bottles (2) made of glass for pharmaceutical or laboratory use, from at least one raw material consisting of a glass blank (5), preferably from glass tube (5), comprising at least one forming station (4) of glass items; at least one burner (7) associated with said forming station and configured to generate a flame (6) having a calorific power sufficient to bring at least part of the glass blank (5), notably the glass tube (5), to melting temperature; and a feeding system (12) of the burner (7); **characterized in that** said feeding system (12) comprises in combination:
(i)- a source (13) of biogas (14),
(ii)- a source (15) of hydrogen (16),
(iii)- a mixer (18) connected with said biogas and hydrogen sources and configured to create in predetermined proportions a mixture (19) biogas/hydrogen and to supply said mixture to the at least one burner (7),
(iv)- a supply (21) to the at least one burner (7) of a gaseous comburent (22) in such an amount as to generate together with said mixture (19) biogas/hydrogen, after controlled ignition, a flame (6) suitable for bringing glass to melting temperature.

8. The plant according to claim 7, **characterized in that** the biogas source (14) consists of a plant (13) producing from renewable configured to provide biogas containing at least 50% by volume methane, preferably at least 52%vol methane.

9. The plant according to claim 7 or 8, **characterized in that** the source of hydrogen (16) is at least one pressurized cylinder (15) containing substantially pure industrial hydrogen; said gaseous comburent (22) supply (21) consisting of a generator (25) of air and/or oxygen flow.

10. The plant according to anyone of claims from 7 to 9, **characterized in that** said mixer (18) is configured to generate a biogas/hydrogen mixture (19) having a hydrogen content between 20%vol and 30%vol.

## Patentansprüche

1. Verfahren zum Formen von Glasartikeln durch Flammen, insbesondere, aber nicht ausschließlich, Glasflaschen (2) für pharmazeutische oder Laborzwecke, aus mindestens einem Rohmaterial, das aus einem Glasrohling, vorzugsweise einem Glasrohr (5), besteht, wobei das Verfahren die Schritte umfasst:
(i)- Zuführen mindestens eines aus einem Glasrohling (5), vorzugsweise einem Glasrohr (5), bestehenden Rohmaterials zu mindestens einer mit mindestens einem Brenner (7) ausgestatteten Formstation (4);
(ii)- mittels des mindestens einen Brenners (7), Erzeugen einer Flamme (6) mit ausreichender Temperatur, um mindestens einen Teil des mindestens einen Rohmaterials, das aus einem Glasrohling (5), nämlich einem Glasrohr (5), besteht, dazu zu bringen, die Schmelztemperatur von Glas zu erreichen;
(iii)- Formen eines Glasartikels (2) durch Bearbeiten und Schneiden des mindestens einen Teils des Glasrohlings, nämlich des Glasrohrs (5), das auf Glasschmelztemperatur gebracht wird; **dadurch gekennzeichnet, dass** der Schritt des Erzeugens der Flamme die folgenden Schritte umfasst:
(iv)- Bereitstellen einer Versorgungsquelle (13) eines Biogases (14);
(v) - Bereitstellen einer Versorgungsquelle (15) eines Wasserstoffs (16);
(vi)- Zuführen eines gesteuerten Biogasflusses (14) und eines gesteuerten Wasserstoffflusses (16) zu einem Mischer (18), um in dem Mischer ein Gemisch (19) aus Biogas/Wasserstoff in vorbestimmten Anteilen zu erzeugen;
(vii) Zuführen des Gemisches (19) aus Biogas/Wasserstoff zu dem mindestens einen Brenner (7) zusammen mit einem gesteuerten Fluss eines Brennmittels oder Oxidationsmittels (22), um die Flamme zu erzeugen.

2. Verfahren nach Anspruch 1, **dadurch gekennzeichnet, dass** das Brennmittel (22) Luft und/oder Sauerstoff ist.

3. Verfahren nach Anspruch 1 oder 2, **dadurch gekennzeichnet, dass** die Flamme (6) mittels des mindestens einen Brenners (7) erzeugt wird, in dem das Biogas/Wasserstoff-Gemisch (19) und das Brennmittel (22) in geeigneten Anteilen gemischt werden und die gesteuerte Zündung des mit dem Brennmittel vermischten Biogas/Wasserstoff-Gemisches erzeugt wird.

4. Verfahren nach einem der vorhergehenden Ansprüche, **dadurch gekennzeichnet, dass** die Versorgungsquelle (13) von Biogas (14) so gewählt wird, dass das Biogas (14) Methan in mindestens 50 Vol.- % enthält.

5. Verfahren nach einem der vorhergehenden Ansprüche, **dadurch gekennzeichnet, dass** die Versorgungsquelle (15) von Wasserstoff (16) aus einem Druckzylinder besteht, der im Wesentlichen reinen Wasserstoff enthält.

6. Verfahren nach einem der vorhergehenden Ansprüche, **dadurch gekennzeichnet, dass** das Biogas/Wasserstoff-Gemisch (19) in dem Mischer so hergestellt wird, dass es einen Wasserstoffgehalt zwischen 20 und 30 Vol.- %, berechnet auf das Gesamtvolumen des Gemisches, aufweist.

7. Anlage (1) zur Herstellung von Glasartikeln durch Flammen, insbesondere aber nicht ausschließlich Flaschen (2) aus Glas für pharmazeutische oder Laborzwecke, aus mindestens einem Rohmaterial, bestehend aus einem Glasrohling (5), vorzugsweise aus einem Glasrohr (5), umfassend mindestens eine Formstation (4) von Glasartikeln; mindestens einen mit der Formstation assoziierten Brenner (7), der konfiguriert ist, um eine Flamme (6) mit einer Heizleistung zu erzeugen, die ausreicht, um mindestens einen Teil des Glasrohlings (5), insbesondere des Glasrohrs (5), auf Schmelztemperatur zu bringen; und ein Zuführsystem (12) des Brenners (7); **dadurch gekennzeichnet, dass** das Zuführsystem (12) in Kombination umfasst:
(i)- eine Quelle (13) Biogas (14),
(i)- eine Quelle (15) Wasserstoff (16),
(iii)- einen Mischer (18), der mit den Biogas- und Wasserstoffquellen verbunden ist und konfiguriert ist, um in vorbestimmten Anteilen ein Gemisch (19) Biogas/Wasserstoff zu erzeugen und das Gemisch dem mindestens einen Brenner (7) zuzuführen,
(iv)- eine Zufuhr (21) eines gasförmigen Brennmittels (22) zu dem mindestens einen Brenner (7) in einer solchen Menge, dass zusammen mit dem Gemisch (19) Biogas/Wasserstoff nach gesteuerter Zündung eine Flamme (6) erzeugt wird, die geeignet ist, Glas auf Schmelztemperatur zu bringen.

8. Anlage nach Anspruch 7, **dadurch gekennzeichnet, dass** die Biogasquelle (14) aus einer Anlage (13) besteht, die aus erneuerbaren Energien produziert und so konfiguriert ist, dass sie Biogas bereitstellt, das mindestens 50 Vol.- % Methan, vorzugsweise mindestens 52Vol.- % Methan enthält.

9. Anlage nach Anspruch 7 oder 8, **dadurch gekennzeichnet, dass** die Wasserstoffquelle (16) mindestens ein Druckzylinder (15) ist, der im Wesentlichen reinen industriellen Wasserstoff enthält; wobei die Versorgung (21) gasförmiges Brennmittel (22) aus einem Generator (25) für Luft- und/oder Sauerstoffstrom besteht.

10. Anlage nach einem der Ansprüche 7 bis 9, **dadurch gekennzeichnet, dass** der Mischer (18) konfiguriert ist, um ein Biogas/Wasserstoff-Gemisch (19) mit einem Wasserstoffgehalt zwischen 20Vol.- % und 30Vol.- % zu erzeugen.

## Revendications

1. Procédé permettant d'effectuer le formage d'articles en verre par flamme, notamment mais non exclusivement de bouteilles en verre (2) à usage pharmaceutique ou de laboratoire, à partir d'au moins une matière première constituée d'une ébauche en verre, de préférence d'un tube en verre (5), le procédé comprenant les étapes suivantes
(i)- la fourniture d'au moins une matière première consistant en une ébauche en verre (5), de préférence un tube en verre (5), à au moins un poste de formage (4) équipé d'au moins un brûleur (7) ;
(ii)- la génération, au moyen dudit brûleur (7), d'une flamme (6) d'une température suffisante pour qu'au moins une partie de ladite matière première consistant en une ébauche en verre (5), à savoir un tube en verre (5), atteigne la température de fusion du verre ;
(iii)- le formage d'un article en verre (2) en usinant et en coupant ladite partie au moins de l'ébauche en verre, à savoir le tube en verre (5), en l'amenant à la température de fusion du verre ; **caractérisé en ce que** l'étape de génération de la flamme comprend les étapes suivantes :
(iv)- la fourniture d'une source d'alimentation (13) en biogaz (14) ;
(v)- la fourniture d'une source d'alimentation (15) en hydrogène (16) ;
(vi)- l'alimentation d'un flux contrôlé de biogaz (14) et d'un flux contrôlé d'hydrogène (16) à un mélangeur (18), pour créer, dans le mélangeur, un mélange (19) de biogaz/hydrogène dans des proportions prédéterminées ;
(vii) l'alimentation dudit brûleur (7) avec ledit mélange (19) de biogaz/hydrogène ainsi qu'un flux contrôlé d'un comburant ou oxydant (22), de manière à générer ladite flamme.

2. Procédé selon la revendication 1, **caractérisé en ce que** le comburant (22) est de l'air et/ou de l'oxygène.

3. Procédé selon la revendication 1 ou 2, **caractérisé en ce que** ladite flamme (6) est générée au moyen dudit brûleur (7), en y mélangeant ledit mélange de biogaz/hydrogène (19) et ledit comburant (22) dans des proportions appropriées et en produisant l'allumage contrôlé du mélange de biogaz/hydrogène mélangé au comburant.

4. Procédé selon l'une des revendications précédentes, **caractérisé en ce que** ladite source d'alimentation (13) en biogaz (14) est choisie de manière à ce que le biogaz (14) contienne au moins 50 % de méthane en volume.

5. Procédé selon l'une des revendications précédentes, **caractérisé en ce que** ladite source d'alimentation (15) en hydrogène (16) consiste en un cylindre sous pression contenant de l'hydrogène pratiquement pur.

6. Procédé selon l'une quelconque des revendications précédentes, **caractérisé en ce que** ledit mélange (19) de biogaz/hydrogène est réalisé dans ledit mélangeur de manière à avoir une teneur en hydrogène comprise entre 20 et 30 % en volume calculée sur le volume total du mélange.

7. Installation (1) pour la production d'articles en verre par flamme, notamment mais non exclusivement de bouteilles (2) en verre à usage pharmaceutique ou de laboratoire, à partir d'au moins une matière première constituée d'une ébauche en verre (5), de préférence d'un tube en verre (5), comprenant au moins un poste de formage (4) d'articles en verre ; au moins un brûleur (7) associé audit poste de formage et configuré pour générer une flamme (6) ayant un pouvoir calorifique suffisant pour amener au moins une partie de l'ébauche en verre (5), notamment le tube en verre (5), à la température de fusion ; et un système d'approvisionnement (12) du brûleur (7) ; **caractérisée en ce que** ledit système d'approvisionnement (12) comprend en combinaison :
(i)- une source (13) de biogaz (14),
(ii)- une source (15) d'hydrogène (16),
(iii)- un mélangeur (18) raccordé aux sources de biogaz et d'hydrogène et configuré pour créer, dans des proportions prédéterminées, un mélange (19) de biogaz/hydrogène et pour alimenter ledit mélange audit brûleur (7),
(iv)- une alimentation (21) dudit brûleur (7) en un comburant gazeux (22) dans une quantité telle qu'il génère avec ledit mélange (19) de biogaz/hydrogène, après allumage contrôlé, une flamme (6) apte à amener le verre à la température de fusion.

8. Installation selon la revendication 7, **caractérisée en ce que** la source de biogaz (14) consiste en une installation (13), produisant à partir de matières renouvelables, configurée pour fournir du biogaz contenant au moins 50 % de méthane en volume, de préférence au moins 52 % de méthane en volume.

9. Installation selon la revendication 7 ou 8, **caractérisée en ce que** la source d'hydrogène (16) est au moins un cylindre sous pression (15) contenant de l'hydrogène industriel pratiquement pur ; ladite alimentation (21) en comburant gazeux (22) consistant en un générateur (25) de flux d'air et/ou d'oxygène.

10. Installation selon l'une quelconque des revendications 7 à 9, **caractérisée en ce que** ledit mélangeur (18) est configuré pour générer un mélange de biogaz/hydrogène (19) ayant une teneur en hydrogène comprise entre 20 et 30 % en volume.
